# EUROPÄISCHE PATENTSCHRIFT

(11) **EP 0 606 297 B1**
(45) Veröffentlichungstag und Bekanntmachung des Hinweises auf die Patenterteilung: **18.12.1996**
(21) Anmeldenummer: 92920274.5
(22) Anmeldetag: 30.09.1992
(51) Int. Cl.: B60L 11/02

(54) **ANTRIEBSANORDNUNG FÜR EIN KRAFTFAHRZEUG**
DRIVE SYSTEM FOR A MOTOR VEHICLE
SYSTEME D'ENTRAINEMENT D'UN VEHICULE A MOTEUR

(30) Priorität: 04.10.1991 DE 4133059
(43) Veröffentlichungstag der Anmeldung: 20.07.1994
(73) Patentinhaber: FICHTEL & SACHS AG, D-97424 Schweinfurt (DE)
(72) Erfinder: ADLER, Uwe, D-97422 Schweinfurt (DE); DREXL, Hans-Jürgen, D-97453 Schonungen (DE); LUTZ, Dieter, D-97422 Schweinfurt (DE); NAGLER, Franz, D-97503 Ottendorf (DE); OCHS, Martin, D-97422 Schweinfurt (DE); SCHIEBOLD, Stefan, D-97421 Schweinfurt (DE); SCHMIDT-BRÜCKEN, Hans-Joachim, D-97505 Geldersheim (DE); THIELER, Wolfgang, D-97437 Hassfurt (DE); WAGNER, Michael, D-97464 Niederwerrn (DE); WESTENDORF, Holger, D-97456 Hambach (DE); WYCHNANEK, Rainer, D-97532 Madenhausen (DE)
(74) Vertreter: Meissner, Peter E., Dipl.-Ing.
(86) Internationale Anmeldenummer: DE9200833
(87) Internationale Veröffentlichungsnummer: WO9307019

(56) Entgegenhaltungen:
- EP-A- 0 159 005
- EP-A- 0 340 686
- DE-A- 3 243 515

## Beschreibung

Die Erfindung betrifft eine Antriebsanordnung für ein Kraftfahrzeug und insbesondere eine Antriebsanordnung, bei welcher das Kraftfahrzeug von wenigstens einem Elektromotor angetrieben wird, der von einer ihrerseits von einer Brennkraftmaschine angetriebenen Generatoranordnung gespeist wird.

Herkömmliche Brennkraftmaschinen, wie sie üblicherweise in Kraftfahrzeugen eingesetzt werden, können eine gewünschte Ausgangsleistung bestimmter Größe bei unterschiedlicher Motordrehzahl erzeugen. In einem DrehmomentMotordrehzahl-Kennlinienfeld folgen die Betriebspunkte gleicher Ausgangsleistung annähernd hyperbelförmigen Kennlinien entsprechend der Beziehung, daß die Ausgangsleistung im wesentlichen gleich dem Produkt aus Motordrehzahl und Drehmoment ist. Den Betriebspunkten konstanter Ausgangsleistung sind jedoch in dem Kennlinienfeld unterschiedliche Werte sonstiger Betriebsparameter, wie zum Beispiel des spezifischen Kraftstoffverbrauchs, der Schadstoffmenge und Schadstoffzusammensetzung der Abgase oder auch der Geräuschentwicklung der Brennkraftmaschine zugeordnet. Durch geeignete Auswahl der Betriebspunkte könnte für jede gewünschte Ausgangsleistung ein Optimum eines der Betriebsparameter, beispielsweise des spezifischen Kraftstoffverbrauchs, d.h. des auf die geleistete Arbeit bezogenen Kraftstoffverbrauchs, ermittelt werden.

Bei herkömmlichen, von einer Brennkraftmaschine über ein mechanisches Getriebe angetriebenen Kraftfahrzeugen können die Betriebspunkte für eine gewünschte Leistung nur sehr begrenzt dem Betriebsparameteroptimum angenähert werden, da die Motordrehzahl nur entsprechend der Getriebeabstufung wählbar verändert werden kann.

Aus "VDI-Berichte" Nr. 878, 1991, Seiten 611 bis 622 ist eine Antriebsanordnung für ein Kraftfahrzeug bekannt, dessen Räder von gesonderten Elektromotoren angetrieben werden. Den Strom der Elektromotore liefert ein von einer Brennkraftmaschine angetriebener Generator, wobei eine elektronische Steuerung den aus dem Generator den Elektromotoren zugeführten Strom abhängig von der an einem Fahrpedal vom Fahrer des Kraftfahrzeugs gewünschten Antriebsleistung steuert. Für derartige Antriebe geeignete Elektromotoren und Generatoren sind beispielsweise aus der europäischen Patentanmeldung 0 159 005 bekannt; eine geeignete Steuerung ist in der europäischen Patentanmeldung 0 340 686 beschrieben.

Die DE 32 43 515 A1 befaßt sich mil einer Strategie zur Einstellung von Leistung und Drehzahl des Verbrennungsmotors einer dieselelektrischen Lokomotive während des Anfahrvorgangs. Bei einer Lokomotive handelt es sich um ein spurgebundenes Fahrzeug, bei dem im Unterschied zu Kraftfahrzeugen für den Straßenverkehr an sich üblicherweise in weiten Phasen des Fahrbetriebs relativ konstante Fahrbedingungen herrschen. Lediglich für die relativ kurze Phase des Anfahrvorgangs sollen gemäß diesem Stand der Technik unnötig hohe Verbrennungsmotordrehzahlen vermieden werden, die an sich zwangsläufig Folge des wegen der niedrigen Fahrzeuggeschwindigkeit ebenfalls niedrigen Antriebsleistung wären. Hierzu ist vorgesehen, unterhalb eines vorgegebenen Schwellenwertes der Fahrzeuggeschwindigkeit die Drehzahl des Verbrennungsmotors mit zunehmender Fahrzeuggeschwindigkeit und mit einer von der Führungsgröße (Soll-Leistung des Antriebs) abhängigen Steilheit ansteigen zu lassen, so daß die Drehzahl bei Erreichen des Schwellenwertes der Fahrzeuggeschwindigkeit den jeweiligen Drehzahlsollwert erreicht und bei höheren Geschwindigkeiten auf diesem Drehzahlsollwert gehalten wird. Die Drehzahlsollwerte sind im übrigen jeweils einem Soll-Leistungswert fest zugeordnet. Die Steuerung sorgt während des Anfahrvorgangs dafür, daß der Sollwert der elektrischen Leistung des Generators des Fahrzeugs entsprechend der Änderung der Verbrennungsmotor-Ist-Drehzahl verändert wird. Wie das Ausführungsbeispiel erkennen läßt, sind sowohl der Anstieg der Drehzahl im Übergangsbereich als auch die Zuordnung zwischen Führungsgröße und Drehzahl willkürlich als lineare Funktion vorgegeben. Die Möglichkeit, eine bestimmte Soll-Leistung des Verbrennungsmotors bei unterschiedlichen Soll-Drehzahlen jeweils in Abhängigkeit von vorgegebenen Optimierungskriterien (z.B. Verbrauch, Geräuschemission, Schadstoffemission) anhand eines entsprechenden Kennlinienfeldes des Verbrennungsmotors festzulegen, wird nicht erwogen.

Störungen im Betrieb einer Brennkraftmaschine kündigen sich vielfach frühzeitig an, ohne daß der Fahrer dies rechtzeitig wahrnimmt. Häufig erfolgt erst dann eine Reaktion (z.B. Abstellen der Brennkraftmaschine), wenn bereits größere Schäden eingetreten sind.

Es ist Aufgabe der Erfindung, eine Antriebsanordnung für ein Kraftfahrzeug zu schaffen, bei welcher der Betrieb der die Antriebsleistung erzeugenden Brennkraftmaschine besser als bisher überwacht werden kann, um Folgeschäden zu minimieren oder sogar ganz zu vermeiden.

Den Ausgangspunkt der Erfindung bildet eine Antriebsanordnung der vorstehend erläuterten Art, welche umfaßt:
eine Brennkraftmaschine mit wenigstens einem ihre Leistung und/oder ihr Drehmoment und/oder ihre Drehzahl beeinflussenden, von einem Stellantrieb steuerbaren Stellglied,
eine mit der Abtriebswelle der Brennkraftmaschine drehfest verbundene elektrische Generatoranordnung,
wenigstens einen aus der Generatoranordnung gespeisten, das Kraftfahrzeug antreibenden Elektromotor und
eine elektronische Steuerung, die einerseits wenigstens den einen Stellantrieb und andererseits die von der Generatoranordnung erzeugte elektrische Leistung und/oder die von dem Elektromotor aufgenommene elektrische Leistung abhängig von der Einstellung eines Fahrpedals steuert. Weiterhin sind Mittel zur Erfassung eines Istwerts der Drehzahl der Brennkraftmaschine oder der mit ihr gekuppelten Generatoranordnung sowie Mittel zur Erfassung eines Istwerts der von der Generatoranordnung erzeugten und/oder der von dem Elektromotor aufgenommenen elektrischen Leistung vorgesehen. Die Steuerung umfaßt Drehzahl-Regelmittel, die die Ist-Drehzahl im zeitlichen Mittel auf einem vorgegebenen Drehzahl-Sollwert halten, sowie Leistungs-Regelmittel, die die elektrische Ist-Leistung im zeitlichen Mittel auf einem vorgegebenen Leistungs-Sollwert halten. Die Steuerung erfaßt erfindungsgemäß den momentanen Verlauf des Stroms der Generatoranordnung in Abhängigkeit von der momentanen Kurbelwellen-Winkelposition der Brennkraftmaschine, ermittelt abhängig von dem Strom den momentanen Verlauf des Drehmoments der Brennkraftmaschine in Abhängigkeit von der Kurbelwellen-Winkelposition und vergleicht den momentanen Verlauf des Drehmoments mit in einem Datenspeicher gespeicherten Sollwerten für die Größe und/oder den momentanen Verlauf des Drehmoments. Ergeben sich Abweichungen mit einer vorbestimmten Größe oder einem vorbestimmten Verlauf, wird wiederum ein eine Betriebsstörung repräsentierendes Steuersignal erzeugt. Die Erfindung nutzt die Tatsache, daß die von der Generatoranordnung erzeugte oder die von dem Elektromotor aufgenommene elektrische Leistung ein mit verhältnismäßig einfachen Mitteln und sehr exakt bestimmbares Maß für die von der Brennkraftmaschine erzeugte Antriebsleistung ist. Auch lassen sich der elektrische Wirkungsgrad der Generatoranordnung und die elektrischen Verluste der Steuerung verhältnismäßig leicht bestimmen und auf die Antriebsleistung der Brennkraftmaschine zurückrechnen.

Der Erfindung liegt die Überlegung zugrunde, daß der zeitliche Verlauf des Stroms der Generatoranordnung ein Maß für das von der Brennkraftmaschine in Abhängigkeit vom Kurbelwellenwinkel erzeugte Drehmoment ist und dementsprechend den zeitlichen Verlauf der Ungleichförmigkeit der Kurbelwellendrehung repräsentiert. Durch Analyse des Drehmomentverlaufs kann die Kompression der einzelnen Zylinder und Fehlfunktionen, wie zum Beispiel Zündaussetzer und Klopfen einzelner Zylinder, diagnostiziert werden. Die Größe des Drehmoments liefert darüber hinaus Informationen für eine Optimierung des Zündwinkels. Da der Strom der Generatoranordnung gegebenenfalls kommutiert und stark geglättet wird, werden zur Ermittlung von Drehmomentschwankungen der Brennkraftmaschine zweckmäßigerweise die Ströme in den einzelnen Strängen der Generatoranordnung gemessen. Das die Betriebsstörung repräsentierende Steuersignal läßt sich zur Information des Fahrers beispielsweise durch Aktivierung einer Warneinrichtung ausnutzen. Ebenso kann ein Fehlerspeicher eines Diagnosesystems gesetzt werden, der Daten für eine spätere Reparatur speichert. Abhängig von der Art des diagnostizierten Fehlers kann aber auch unmittelbar in den Betrieb der Brennkraftmaschine eingegriffen werden, um weitergehende Schäden zu vermeiden. Beispielsweise kann die maximale Leistung und/oder die maximale Drehzahl der Brennkraftmaschine auf tolerierbare Werte begrenzt werden, oder aber es wird ein die Kraftstoffeinspritzmenge eines defekten Zylinders reduzierendes Notfahrprogramm aktiviert.

Unter einem zweiten Aspekt mit selbständiger Bedeutung ermöglicht das der Erfindung zugrunde liegende Antriebskonzept noch weitergehende Diagnosemöglichkeiten. Ziel auch dieses Aspekts ist es, Informationen über den mechanischen Zustand der Brennkraftmaschine zu ermitteln.

Ausgehend von der eingangs erläuterten grundsätzlichen Antriebsanordnung ist unter diesem Aspekt der Erfindung vorgesehen, daß die Steuerung während des Motorbetriebs der Generatoranordnung den momentanen Verlauf des Stroms bei abgestellter Zündung und/oder Kraftstoffzufuhr der Brennkraftmaschine erfaßt und hiervon abhängig den momentanen Verlauf des von der Generatoranordnung erzeugten Schleppmoments in Abhängigkeit vom Kurbelwellenwinkel der Brennkraftmaschine ermittelt und daß die Steuerung Abweichungen der Größe und/oder des Verlaufs des ermittelten Schleppmoments von vorgegebenen Sollwerten und/oder einem Sollverlauf erfaßt und abhängig von der Größe und/oder dem Verlauf der Abweichung ein eine Betriebsstörung repräsentierendes Steuersignal erzeugt.

Dieser Aspekt der Erfindung geht von der Überlegung aus, daß der Generatorstrom bei abgestellter Zündung bzw. Kraftstoffzufuhr den kurbelwellenwinkelabhängigen Verlauf des Schleppmoments der Brennkraftmaschine repräsentiert, so daß durch Analyse des Stromverlaufs auf den mechanischen Zustand der Brennkraftmaschine geschlossen werden kann. Beispielsweise kann aus dem Stromverlauf und damit dem Schleppmomentverlauf auf die Kompression bzw. Verdichtung einzelner Zylinder, auf die Funktionsfähigkeit von Einlaßventilen und Auslaßventilen, auf den Zustand der Lagerstellen, insbesondere der Kurbelwelle, oder auch auf die Zylinderwandreibung geschlossen werden. Die für das Schleppen der Brennkraftmaschine benötigte Leistung kann aus einem Energiespeicher, beispielsweise einer Batterie oder einem von einem Schwungrad angetriebenen Generator, bereitgestellt werden oder aber im Fahrbetrieb bei einer Fahrzeugabbremsung durch den dann im Generatorbetrieb arbeitenden Elektromotor geliefert werden.

Zweckmäßigerweise speichert die Steuerung den momentanen Verlauf des Schleppmoments in Abhängigkeit der Kurbelwellen-Winkelposition in einem Datenspeicher. Auf diese Weise kann der Verlauf des Schleppmoments für wenigstens 720° des Kurbelwellenwinkels erfaßt werden, so daß ein vollständiger Arbeitszyklus einer Viertakt-Brennkraftmaschine analysiert werden kann.

In einer bevorzugten Ausgestaltung erfaßt die Steuerung während des Motorbetriebs der Generatoranordnung die Drehzahl und/oder die Temperatur der Brennkraftmaschine und ermittelt dem momentanen Verlauf des Schleppmoments für mehrere unterschiedliche Werte und/oder zumindest einen zeitabhängigen Verlauf der Drehzahl und/oder der Temperatur. Auf diese Weise kann die Analyse der mechanischen Eigenschaften der Brennkraftmaschine für unterschiedliche Schleppdrehzahlen durchgeführt werden, und ferner kann die Analyse während der Aufwärm- oder Abkühlphase bei sich ändernder Temperatur erfolgen, was eine bessere Extrahierung der Informationen erlaubt.

Die "Schleppdiagnose" muß nicht bei jedem Fahrzeugschubbetrieb bzw. Start der Brennkraftmaschine erfolgen. Zweckmäßigerweise überprüft die Steuerung das Schleppmoment lediglich nach einer vorbestimmten Mehrzahl Anlaßvorgänge der Brennkraftmaschine und/oder nach einer vorbestimmten Fahrstrecke des Kraftfahrzeugs und/oder oberhalb einer festgelegten Temperatur der Brennkraftmaschine auf Abweichungen von den vorgegebenen Sollwerten.

Wie bereits bei dem vorstehenden, auf die Diagnose gerichteten Aspekt der Erfindung erläutert, wird auch unter diesem Aspekt der Erfindung der momentane Verlauf des Schleppmoments aus den jeweils für sich erfaßten Strömen in den einzelnen Wicklungssträngen der mehrere Wicklungsstränge umfassenden Generatoranordnung ermittelt. Auch bei diesem Aspekt der Erfindung läßt sich das die Betriebsstörung der Erfindung repräsentierende Steuersignal zur Information des Fahrers oder für die Speicherung in einem Diagnosesystem ausnutzen, und auch hier kann ein geeignetes Notfahrprogramm durch das Steuersignal aktiviert werden.

Im folgenden soll die Erfindung anhand einer Zeichnung näher erläutert werden. Hierbei zeigt:
- Fig. 1: eine schematische Darstellung einer erfindungsgemäßen Antriebsanordnung für ein Kraftfahrzeug;
- Fig. 2: ein Motorkennlinienfeld einer Brennkraftmaschine der Anordnung nach Fig. 1 zur Erläuterung der Betriebsweise der Anordnung;
- Fig. 3, 4a und 4b: Drehmomentdiagramme zur Erläuterung von Diagnoseeinrichtungen der erfindungsgemäßen Antriebsanordnung.

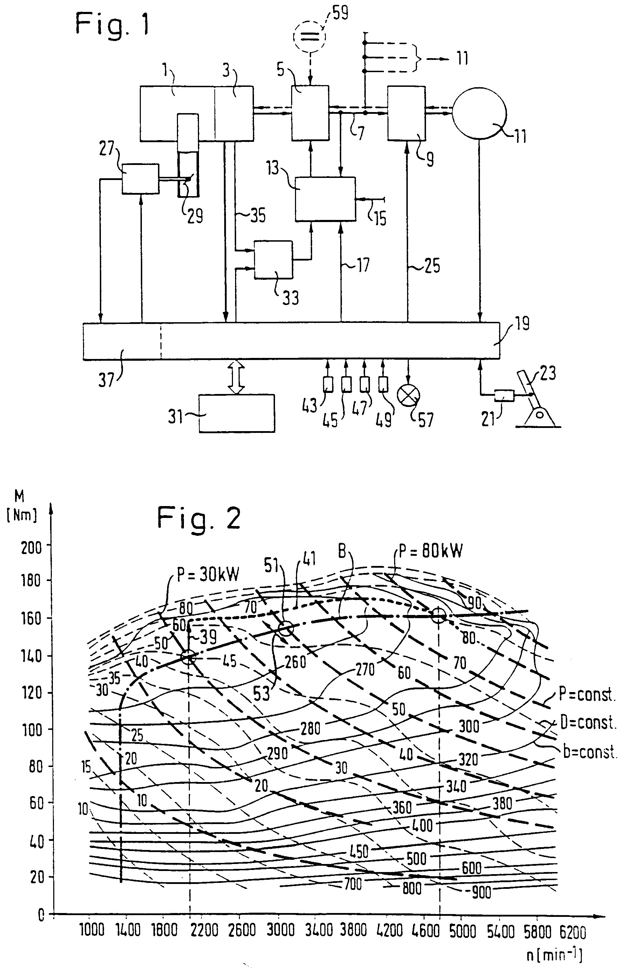

Die in Fig. 1 dargestellte Antriebsanordnung umfaßt eine von einer Brennkraftmaschine 1 angetriebene Generatoranordnung 3 eines Typs mit einer Vielzahl statorseitiger Strangwicklungen und rotorseitiger Permanentmagnete. An die nicht näher dargestellten Strangwicklungen ist eine elektronische Kommutierungs- und Stromsteuerschaltung 5 angeschlossen, die den von der Generatoranordnung 3 bei Antrieb durch die Brennkraftmaschine 1 gelieferten Wechselstrom durch elektronische Kommutierung in einen Gleichstrom steuerbarer Größe wandelt. Die Stromsteuerschaltung 5 speist über einen Gleichspannungszwischenkreis 7 mehrere elektronische Kommutierungs- und Stromsteuerschaltungen 9 von Elektromotoren 11, von denen jeder gesondert je eines der Räder des Kraftfahrzeugs antreibt. Fig. 1 zeigt lediglich einen der Elektromotore 11 mit zugehöriger Kommutierungs- und Stromsteuerschaltung. Auch bei den Elektromotoren 11 handelt es sich bevorzugt um Motore mit einer mehrsträngigen Statorwicklung und einem Permanentmagnetrotor. An die Kommutierungs- und Stromsteuerschaltung 5 ist eine Spannungsregelschaltung 13 angeschlossen, die die Ist-Spannung des Gleichstromzwischenkreises 7 erfaßt und über die Stromsteuerschaltung 5 auf einem bei 15 vorgebbaren Sollwert hält.

Über einen Signalweg 17 kann der von der Stromsteuerschaltung 5 an den Gleichspannungszwischenkreis 7 abgegebene Gleichstrom von einer Steuerung 19 gesteuert werden.

Die Steuerung 19 spricht auf die mittels eines Sensors 21 erfaßte Stellung eines Fahrpedals 23 an und steuert die dem Produkt aus Strom mal Spannung des Gleichspannungszwischenkreises entsprechende, für den Antrieb zur Verfügung stehende elektrische Leistung abhängig von der Fahrpedalstellung. Die Steuerung 19 steuert über einen Signalweg 25 darüber hinaus den Strom der Elektromotore 11 und damit deren Antriebsdrehmoment.

Die an den Gleichstromzwischenkreis 7 gelieferte elektrische Leistung muß unter Berücksichtigung der Verluste der Generatoranordnung 3 und der Stromsteuerschaltung 5, d.h. unter Berücksichtigung der elektrischen Wirkungsgrade dieser Komponenten, von der Brennkraftmaschine 1 aufgebracht werden. Die Steuerung 19 steuert dementsprechend über einen Stellantrieb 27 ein Leistungsstellglied 29 der Brennkraftmaschine, beispielsweise eine Drosselklappe oder eine Einspritzpumpe, ebenfalls abhängig von der Fahrpedalstellung.

Aufgrund der mechanischen Antriebsverbindung arbeiten die Brennkraftmaschine 1 und die Generatoranordnung 3 mit gleicher Drehzahl, wobei im stationären Betrieb das von der Brennkraftmaschine 1 abgegebene Drehmoment gleich dem von der Generatoranordnung 3 aufgenommenen Drehmoment ist. Die von der Brennkraftmaschine erzeugte Leistung ist näherungsweise proportional dem Produkt aus Drehmoment und Drehzahl. Entsprechendes gilt für die von der Generatoranordnung 3 erzeugte elektrische Leistung, die gleich der Leistung der Brennkraftmaschine 1 vermindert um die Wirkungsgradverluste der Generatoranordnung ist. Die Einstellung des Leistungsglieds 29 der Brennkraftmaschine 1 einerseits und der an der Stromsteuerschaltung 5 eingestellte Generatorstrom andererseits bilden zwei Einflußgrößen, die es erlauben, den Betriebspunkt der Brennkraftmaschine 1 in deren Kennfeld längs einer Kennlinie konstanter Leistung im wesentlichen beliebig zu variieren. Fig. 2 zeigt das Kennfeld einer Brennkraftmaschine mit 100 kW Leistung. Das Kennlinienfeld zeigt das von der Brennkraftmaschine abgegebene, von der Generatoranordnung aufgenommene Drehmoment M in Abhängigkeit von der Drehzahl n. Mit dick gestrichelten Linien sind in dem Kennlinienfeld Kurven P konstanter Leistung der Brennkraftmaschine dargestellt. Dünn gestrichelte Linien D bezeichnen unter Angabe des Drosselklappenwinkels die Einstellung des Leistungsstellglieds der Brennkraftmaschine. Mit ausgezogenen dünnen Linien sind in dem Kennfeld der Fig. 2 Kurven b mit konstantem spezifischem Kraftstoffverbrauch in Gramm pro Kilowattstunde eingezeichnet. Das Kennfeld zeigt, daß Betriebspunkte gleicher Leistung bei unterschiedlichen Drehzahlen durch geeignete Einstellung des Drosselklappenwinkels erreicht werden können, daß aber jedem Leistungswert nur ein Betriebspunkt mit minimalem spezifischem Kraftstoffverbrauch zugeordnet ist. Die Betriebspunkte mit minimalem spezifischem Kraftstoffverbrauch liegen in dem Kennfeld auf einer dick strichpunktiert eingezeichneten Linie B. Beispielsweise ist der spezifische Kraftstoffverbrauch für eine Leistung von 30 kW minimal, wenn der Drosselklappenwinkel 45° und die Drehzahl etwa 2100 Umdrehungen pro Minute beträgt.

Die Antriebsanordnung nach Fig. 1 erlaubt es, die Brennkraftmaschine 1 zumindest im stationären Betrieb stets in einem Betriebspunkt mit minimalem Kraftstoffverbrauch zu betreiben. Hierzu sind in einem Datenspeicher 31 der Steuerung 19 Datenkombinationen des Kennfelds gespeichert, die die Betriebspunkte der Kennlinie B, für die sich minimaler spezifischer Kraftstoffverbrauch ergibt, speichert. Die gespeicherten Datenkombinationen umfassen für die den einzelnen Leistungswerten zugeordneten Betriebspunkte jeweils Daten für einen Drehzahl-Sollwert sowie Daten für die Einstellung des Leistungsstellglieds der Brennkraftmaschine 1. Die Steuerung 19 liest abhängig von dem über das Fahrpedal 23 angeforderten Leistungs-Sollwert den Drehzahl-Sollwert sowie den Einstellwert des Stellglieds 29 aus dem Datenspeicher 31 aus. Ein Drehzahlregelkreis 33, der Bestandteil der Steuerung 19 sein kann, regelt über die Stromsteuerschaltung 5 die elektrische Leistung der Generatoranordnung 33 auf einen Wert ein, bei dem die Drehzahl gleich dem Drehzahl-Sollwert des gewünschten Betriebspunkts ist. Die bei 35 dem Drehzahlregler 33 zugeführte Ist-Drehzahlinformation wird beispielsweise mittels eines Sensors oder dergleichen erfaßt. Zugleich mit der Einstellung der Drehzahl stellt die Steuerung 19 den Stellantrieb 27 des Leistungsstellglieds 29 auf den durch die Datenkombination festgelegten Drosselklappenwinkel.

Aufgrund von Temperatureinflüssen oder sonstiger Betriebsparameter der Brennkraftmaschine 1 kann die von der Brennkraftmaschine 1 tatsächlich erzeugte Leistung von dem der Datenkombination des Betriebspunkts zugrunde liegenden Leistungssollwert abweichen. Die Steuerung 19 umfaßt deshalb einen bei 37 angedeuteten Leistungsregler, der abhängig von der durch Strom und Spannung der Generatoranordnung 3 bestimmten elektrischen Leistung einen Leistungs-Istwert ermittelt und mit dem entsprechend der Fahrpedalstellung vorgegebenen Leistungs-Sollwert vergleicht. Zur Leistungsregelung überwacht die Steuerung 19, ob die Drehzahl den Drehzahl-Istwert erreicht hat und gibt danach den auf den Stellantrieb 27 wirkenden Leistungsregler 37 zum Einregeln der Leistung auf den Leistungs-Sollwert frei.

Bei einer Änderung der Fahrpedalstellung, beispielsweise für eine Erhöhung der Leistung von P = 30 kW auf P = 80 kW, ändert die Steuerung 19 die Drosselklappenstellung D von 45° auf den der Datenkombination des neuen Betriebspunkts bei P = 80 kW entsprechenden Winkel von 60°. Die Drosselklappenstellungsänderung bewirkt eine in Fig. 2 durch einen Pfeil 39 dargestellte Erhöhung des Drehmoments, durch die die Brennkraftmaschine 1 auf die dem neuen Betriebspunkt zugeordnete Drehzahl von etwa 4750 Umdrehungen pro Minute beschleunigt wird. Nachdem der Drehzahlregler 33 die Drehzahl auf diesen durch die Datenkombination des neuen Betriebspunkts festgelegten Drehzahlsollwert eingeregelt hat, regelt auch der Leistungsregler 37 die Leistung der Brennkraftmaschine 1 auf den die Datenkombination des neuen Betriebspunkts bestimmenden Leistungs-Sollwert von 80 kW ein. Mit einer punktierten Linie 41 ist in Fig. 2 der drehzahlabhängige Verlauf des Motormoments während der Leistungsänderung dargestellt.

Das Kennfeld der Fig. 2 zeigt die Abhängigkeit des Drehmoments M der Brennkraftmaschine von der Drehzahl der Einheit aus Brennkraftmaschine und Generatoranordnung. Die Steuerung der Antriebsanordnung kann jedoch auch auf der Grundlage eines Kennfelds erfolgen, welches als Parameter die elektrische Ausgangsleistung der Generatoranordnung 3 oder der Stromsteuerung 5 enthält, also den Wirkungsgrad dieser Komponenten mit berücksichtigt. Das Kennlinienfeld des spezifischen Kraftstoffverbrauchs ist in Fig. 2 dem Drehmomentkennfeld der Brennkraftmaschine überlagert, wobei die Datenkombinationen bereits die Betriebspunkte mit minimalem spezifischem Kraftstoffverbrauch repräsentieren. Das Kennfeld des spezifischen Kraftstoffverbrauchs b kann jedoch auch gesondert gespeichert sein, und die Steuerung 19 kann die Datenkombinationen der Betriebspunkte im Einzelfall jeweils aus mehreren Kennfeldern errechnen.

Der Steuerung 19 sind bei 43 angedeutete Kraftstoffmeßeinrichtungen zugeordnet, die den tatsächlichen Kraftstoffverbrauch ermitteln. Bei den Kraftstoffmeßeinrichtungen kann es sich um Durchflußmesser oder dergleichen handeln oder aber um Mittel, die eine Information über die zugeführte oder eingespritzte Kraftstoffmenge einem elektronischen Motorsteuerungssystem entnehmen oder aus Öffnungszeiten von Einspritzventilen ermitteln. Die Steuerung 19 ermittelt den spezifischen Kraftstoff-Istverbrauch aus der aktuell zugeführten Kraftstoffmenge bezogen auf die im aktuellen Betriebspunkt eingestellte Leistung. Die in dem Datenspeicher 31 gespeicherten Daten über den spezifischen Kraftstoffverbrauch werden abhängig vom Ist-Verbrauch kontinuierlich aktualisiert. Auf diese Weise paßt sich das Kennfeld selbsttätig an alterungsbedingte oder durch Serienstreuung bedingte Unterschiede der Brennkraftmaschine 1 an. Die Anpassung des Kennfelds des spezifischen Kraftstoffverbrauchs erfolgt schrittweise, beispielsweise in der Form, daß die gespeicherte Information über den spezifischen Kraftstoffverbrauch lediglich um einen vergleichsweise kleinen Bruchteil der tatsächlichen Abweichung geändert wird. Auf diese Weise wird der Einfluß von Meßfehlern oder dergleichen bei der Ermittlung des spezifischen Kraftstoffverbrauchs auf das Kennfeld klein gehalten. Es versteht sich, daß die Steuerung 19 beispielsweise nach herkömmlichen iterativen Methoden auch die Betriebspunkte mit minimalem spezifischem Kraftstoffverbrauch nach einer Aktualisierung des Kennfelds korrigiert.

Die Anpassung des Verbrauchskennfelds erfolgt in Abhängigkeit weiterer Betriebsparameter der Brennkraftmaschine 1, insbesondere in Abhängigkeit von der mittels eines Temperatursensors 45 erfaßten Öltemperatur oder Kühlwassertemperatur der Brennkraftmaschine 1.

Neben dem spezifischen Kraftstoffverbrauch können weitere Betriebsparameter bei der Einstellung eines optimalen Betriebspunkts der Brennkraftmaschine 1 mit berücksichtigt werden. Beispielsweise wird die den Betriebspunkt festlegende Leistung auch durch den Zündwinkel oder das Kraftstoff-Luft-Mischungsverhaltnis oder die Temperatur der angesaugten Luft beeinflußt. Der Datenspeicher 31 kann zusätzliche Kennfelder für diese Betriebsparameter enthalten. Der Datenspeicher 31 enthält ferner Kombinationsalgorithmen, die es der Steuerung 19 ermöglichen, die Bedeutung der einzelnen Betriebsparameter zu bewerten und abhängig von der Bewertung ein der Betriebssituation angemessenes Optimum mehrerer der Betriebsparameter zu ermitteln.

Basis der Ermittlung des gemeinsamen Optimums mehrerer Betriebsparameter ist, daß die von der Brennkraftmaschine oder die von der Generatoranordnung abgegebene Leistung auf dem vorgegebenen Leistungs-Sollwert konstant gehalten wird. Diese Voraussetzung ermöglicht es, auch nicht kraftstoffverbrauchsorientierte Betriebsparameter in die Optimierung mit einzubeziehen. Die Steuerung 19 variiert die auf die Leistung sich auswirkenden Betriebsgrößen vorzugsweise so, daß sich ein durch die gespeicherten Kombinationsalgorithmen definiertes Optimum aus der Kombination folgender Ziele ergibt:
- Minimaler spezifischer Kraftstoffverbrauch,
- minimale Schadstoffmenge und harmloseste Schadstoffzusammensetzung,
- minimale Geräuschemission,
- möglichst große Schonung der Brennkraftmaschine.

Die Steuerung spricht hierzu auf einen Sensor 47 zur Ermittlung des Schadstoffgehalts, zum Beispiel eine Lambda-Sonde und/oder auf einen Sensor 49 zur Geräuschmessung an. Der Datenspeicher 31 enthält dementsprechend Kennfelder für die Schadstoffemission und -zusammensetzung, ein Geräuschkennfeld sowie Informationen über die Motorschonung. Es versteht sich, daß die Steuerung 19 gegebenenfalls auch nur einen Teil der vorstehenden Kennfelder bei der Bestimmung des optimalen Betriebspunkts berücksichtigt und daß auch diese Kennfelder gegebenenfalls aktualisierbar sind, wie dies anhand des Kennfelds für den spezifischen Kraftstoffverbrauch bereits erläutert wurde.

Beispielsweise variiert die Steuerung 19 den Zündwinkel und die Einstellung des Leistungsstellglieds 29 gemeinsam derart, daß bei konstant gehaltener Leistung der spezifische Kraftstoffverbrauch abnimmt, ohne daß jedoch zulässige Höchstgrenzen der Schadstoffemission überschritten werden. Für die Einstellung des Betriebspunkts mit niedrigstem spezifischem Kraftstoffverbrauch variiert die Steuerung 19 die Drehzahl mittels des Drehzahlreglers 33 und die Einstellung des Leistungsstellglieds 29 derart, daß die ermittelte Ausgangsleistung der Generatoranordnung 3 konstant bleibt. In dem Kennfeld der Fig. 2 bedeutet dies ein Entlangführen des Betriebspunkts entlang einer Kurve konstanter Leistung, wie dies für einen Betriebspunkt 51 durch einen Doppelpfeil 53 angedeutet ist. Der Leistungsregler 37 sorgt nach einer Änderung von Drehzahl und Einstellung des Leistungsstellglieds 29 für das Konstanthalten der Leistung. Entlang der Kurve konstanter Leistung wird der spezifische Kraftstoffverbrauch sowie gegebenenfalls die Werte der darüber hinaus zu berücksichtigenden Betriebsparameter ermittelt und zusammen mit der zugehörigen Drehzahl in dem Datenspeicher 31 gespeichert. Erhöht sich der spezifische Kraftstoffverbrauch bei der Bewegung längs der Kurve konstanter Leistung, so ist dies ein Zeichen, daß sich der aktuelle Betriebspunkt vom optimalen Betriebspunkt entfernt. Durch nachfolgende Variation der Drehzahl sorgt die Steuerung 19 wieder für einen günstigeren spezifischen Kraftstoffverbrauch. Die Einregelung der für minimalen Kraftstoffverbrauch günstigsten Drehzahl kann auch im laufenden Fahrbetrieb erfolgen, so daß das Kennfeld für den exakten spezifischen Kraftstoffverbrauch nicht zwingend bekannt sein muß, um im Betrieb optimale Verhältnisse zu schaffen.

Werden mehrere Betriebsparameter optimiert, so erfolgt dies so, daß bis auf den zu variierenden Parameter die übrigen Parameter konstant gehalten werden.

Die Möglichkeit, Kennfelddaten des Leistungskennfelds der Einheit aus Brennkraftmaschine und Generatoranordnung zu aktualisieren, erlaubt eine Fehlerdiagnose der Brennkraftmaschine, wie dies nachfolgend erläutert wird.

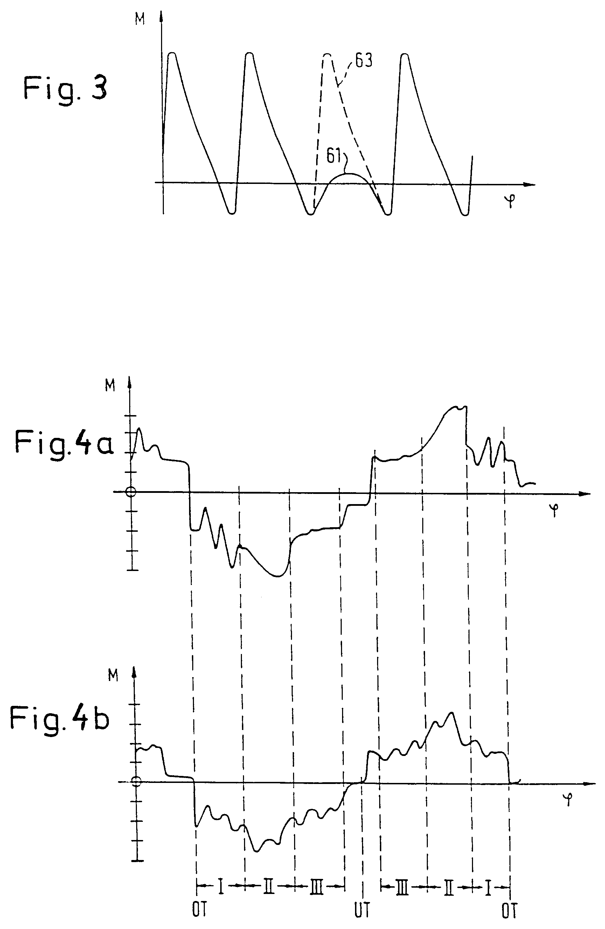

Für die Fehlerdiagnose überwacht die Steuerung 19 die in dem Datenspeicher 31 gespeicherten Kennfelddaten für den spezifischen Kraftstoffverbrauch. Aus der Drehzahlabhängigkeit und der Größe aktualisierter Verbrauchsdaten kann durch Vergleich mit früheren Daten, insbesondere mit einem den Neuzustand der Brennkraftmaschine 1 repräsentierenden ursprünglichen Soll-Kennfeld eine Information über den Motorzustand, zum Beispiel dessen Verschleiß, gewonnen werden. Beispielsweise kann bei einem Vierzylindermotor bei plötzlichem Abfall des Kehrwerts des spezifischen Kraftstoffverbrauchs auf 75% des ursprünglichen Werts auf einen Ausfall eines der Zylinder, zum Beispiel durch eine defekte Zündkerze, geschlossen werden. Ausgehend von dem von der Generatoranordnung 3 erzeugten Strom, insbesondere den noch nicht geglätteten Strömen in den einzelnen Strängen kann die Steuerung 19 die Größe des periodisch schwankenden Drehmoments der Brennkraftmaschine 1 abhängig von der Kurbelwellen-Winkelposition ermitteln und in dem Datenspeicher 31 für Diagnosezwecke speichern. Aus dem gespeicherten Momentenverlauf kann zum Beispiel für einzelne Zylinder deren Kompression oder aber Fehlfunktionen, wie zum Beispiel Zündaussetzer oder Klopfen einzelner Zylinder, erfaßt werden. Aus der Größe des Moments kann auf Zündwinkelfehler geschlossen werden. Fig. 3 zeigt den Verlauf des Drehmoments in Abhängigkeit vom Kurbelwellenwinkel φ. Bei 61 ist in dem Momentenverlauf ein Zündaussetzer im Vergleich zu dem bei 63 gestrichelt eingezeichneten korrekten Momentenverlauf zu erkennen. Die Steuerung 19 vergleicht für die Analyse den ermittelten Momentenverlauf einzelner Zylinder entweder mit dem für andere Zylinder der Brennkraftmaschine sich ergebenden Verlauf oder mit gespeicherten Sollwerten oder Sollverläufen.

Bei Feststellen eines Fehlers erzeugt die Steuerung 19 ein den Fahrer zum Beispiel über ein Display 57 warnendes Informationssignal und speichert den diagnostizierten Fehler als Information für eine künftige Reparatur in dem Datenspeicher 31 ab. Gegebenenfalls aktiviert die Steuerung 19 durch Veränderung der Kraftstoffeinspritzmenge ein Notfahrprogramm, wobei sie die Kraftstoffeinspritzmenge gegebenenfalls gezielt für einzelne Zylinder reduziert oder ganz abstellt. Weiterhin oder auch alternativ kann die Steuerung 19 die maximale Leistung der Brennkraftmaschine 1 und/oder die maximale Drehzahl reduzieren bzw. die im Betrieb erreichbare Drehzahl begrenzen.

Die Generatoranordnung 3 arbeitet in bestimmten Betriebssituationen als Elektromotor, der die Brennkraftmaschine 1 schleppt. Die hierfür benötigte elektrische Leistung wird über die Stromsteuerung 5 aus einem Energiespeicher 59, beispielsweise der Fahrzeugbatterie, oder einem von einem Schwungrad angetriebenen Generator bereitgestellt, oder aber die elektrische Energie wird bei einer Fahrzeugabbremsung von den dann im Generatorbetrieb arbeitenden Elektromotoren 11 geliefert, wie dies in Fig. 1 durch gestrichelt eingezeichnete Leistungswege angedeutet ist. Bei abgestellter Kraftstoffeinspritzung und Zündung erlaubt die Analyse des an der Generatoranordnung 3 erfaßten Drehmoments Rückschlüsse auf den mechanischen Zustand der Brennkraftmaschine 1. Betriebssituationen, bei welchen die Generatoranordnung 3 die Brennkraftmaschine 1 schleppt, treten beispielsweise beim Anlassen der Brennkraftmaschine 1 durch die dann motorisch arbeitende Generatoranordnung 3 vor Beginn der Kraftstoffeinspritzung und Zündung oder im Fahrbetrieb auf, wenn keine Leistungs-oder Momentenanforderung an die Brennkraftmaschine vorliegt.

Die von dem Kurbelwellenwinkel abhängigen Schleppmomentverläufe erlauben die Ermittlung charakteristischer, den Zustand der Brennkraftmaschine 1 beschreibender Größen, insbesondere der Kompression bzw. Verdichtung der einzelnen Zylinder, der Funktionsfähigkeit der Einlaßventile und Auslaßventile, des Zustands der Lagerstellen, beispielsweise der Kurbelwellenlager, der Zylinderwandreibung usw.. Die Steuerung 19 erfaßt den Drehmomentverlauf über wenigstens 720°, d.h. über wenigstens zwei Kurbelwellendrehungen, um so auch bei einer Viertakt-Brennkraftmaschine den Zustand sämtlicher Zylinder analysieren zu können. Darüber hinaus steuert die Steuerung 19 die Generatoranordnung 3 so, daß Schleppmomentverläufe bei mehreren unterschiedlichen Drehzahlen und/oder bei einem vorbestimmten, zeitlich sich ändernden Drehzahlverlauf erfaßt werden. Weiterhin ermöglicht es die Steuerung 19, daß der Drehmomentverlauf auch während einer Aufwärmphase oder einer Abkühlphase der Brennkraftmaschine 1 für unterschiedliche Kühlwasser- oder Öltemperaturen erfaßt wird. Die Kenntnis mehrerer Schleppmomentverläufe bei unterschiedlichen Drehzahlen und/oder Temperaturen der Brennkraftmaschine 1 erlaubt eine eindeutigere Extrahierung charakteristischer Zustandsgrößen. Fig. 4a zeigt als Beispiel den Verlauf des von der Steuerung 19 erfaßten Schleppmoments M einer Ein-Zylinder-Zweitakt-Brennkraftmaschine mit ordnungsgemäßen Kurbelwellenlagern in Abhängigkeit vom Kurbelwellenwinkel φ, während Fig. 4b den Schleppmomentverlauf dieser Brennkraftmaschine bei defektem Kurbelwellenlager zeigt. Mit OT ist der obere Totpunkt bezeichnet; UT ist der untere Totpunkt. Die vollständige Kurbelwellenumdrehung ist symmetrisch zum oberen Totpunkt in die Bereiche I, II und III unterteilt, die bei ordnungsgemäßem Kurbelwellenlager charakteristische, deutlich unterscheidbare Verläufe zeigen (Fig. 4a). Fig. 4b zeigt bei einem Defekt der Kurbelwellenlager hingegen deutliche Abweichungen des Schleppmomentverlaufs insbesondere im Bereich III, die von der Steuerung 19 bei der Analyse des Schleppmomentverlaufs erfaßt und als Lagerschaden gemeldet werden.

Durch Erfassen unzulässiger Abweichungen des Schleppmomentverlaufs von Sollwerten oder Sollverläufen läßt sich frühzeitig ein Schaden oder ein drohender Schaden erkennen und lokalisieren. Auch bei der Diagnose anhand des Schleppmomentverlaufs reagiert die Steuerung 19 dem erkannten Fehler entsprechend, indem beispielsweise der Fahrer über das Display 57 gewarnt und in dem Datenspeicher für künftige Reparaturen Informationen über den diagnostizierten Fehler gespeichert werden. Bei aktuell auftretenden Fehlern kann wiederum ein Notfahrprogramm aktiviert werden, beispielsweise durch Reduzierung der maximalen Leistung der Brennkraftmaschine 1 oder der maximalen Drehzahl oder durch Begrenzung der Drehzahl oder durch gezieltes Verändern der Kraftstoffeinspritzmenge für einzelne Zylinder bis hin zum Abstellen der Kraftstoffeinspritzung bei einem defekten Zylinder zwecks Schadstoffreduzierung.

Die Analyse des Schleppmoments muß nicht bei jedem zu einer Abschaltung der Kraftstoffzufuhr bzw. Zündung führenden Fahrzeugschubbetrieb bzw. nicht bei jedem Motorstart erfolgen. Die Diagnose kann jeweils nach einer vorbestimmten Mehrzahl von Anlaßvorgängen der Brennkraftmaschine 1 oder nach vorbestimmten Kilometerabständen erfolgen. Sofern eine elektronische Motorsteuerung zusätzlich vorhanden ist, kann die Schleppmomentdiagnose auch von der Motorsteuerung unter bestimmten Betriebsbedingungen ausgelöst werden. Auch kann die Steuerung 19 dafür sorgen, daß die Diagnose nur oberhalb bestimmter Temperaturen, also bei betriebswarmer Brennkraftmaschine 1, erfolgt.

## Patentansprüche

1. Antriebsanordnung für ein Kraftfahrzeug, umfassend eine Brennkraftmaschine (1) mit wenigstens einem ihre Leistung und/oder ihr Drehmoment und/oder ihre Drehzahl beeinflussenden, von einem Stellantrieb (27) steuerbaren Stellglied (29),
eine mit der Abtriebswelle der Brennkraftmaschine (1) drehfest verbundene elektrische Generatoranordnung (3),
wenigstens einen aus der Generatoranordnung (3) gespeisten, das Kraftfahrzeug antreibenden Elektromotor (11),
eine elektronische Steuerung (19, 33, 37), die einerseits wenigstens den einen Stellantrieb (27) und andererseits die von der Generatoranordnung (3) erzeugte elektrische Leistung und/oder die von dem Elektromotor (11) aufgenommene elektrische Leistung abhängig von der Einstellung eines Fahrpedals (23) steuert,
Mittel (35) zur Erfassung eines Istwerts der Drehzahl der Brennkraftmaschine (1) oder der mit ihr gekuppelten Generatoranordnung (3) sowie
Mittel zur Erfassung eines Istwerts der von der Generatoranordnung (3) erzeugten und/oder der von dem Elektromotor (11) aufgenommenen elektrischen Leistung, wobei die Steuerung (19, 33, 37) Drehzahl-Regelmittel (33) umfaßt, die die Ist-Drehzahl im zeitlichen Mittel auf einem vorgegebenen Drehzahl-Sollwert halten und Leistungs-Regelmittel (37) umfaßt, die die elektrische Ist-Leistung im zeitlichen Mittel auf einem vorgegebenen Leistungs-Sollwert halten,
dadurch gekennzeichnet,
daß die Steuerung (19, 33, 37) den momentanen Verlauf des Stroms der Generatoranordnung (3) in Abhängigkeit von der momentanen Kurbelwellen-Winkelposition der Brennkraftmaschine (1) erfaßt, abhängig von dem Strom den momentanen Verlauf des Drehmoments der Brennkraftmaschine (1) in Abhängigkeit von der Kurbelwellen-Winkelposition ermittelt und mit in einem Datenspeicher (31) gespeicherten Sollwerten für die Größe und/oder den momentanen Verlauf des Drehmoments vergleicht sowie bei Abweichungen mit einer vorbestimmten Große oder einem vorbestimmten Verlauf ein eine Betriebsstörung repräsentierendes Steuersignal erzeugt.

2. Antriebsanordnung für ein Kraftfahrzeug, umfassend eine Brennkraftmaschine (1),
eine mit der Abtriebswelle der Brennkraftmaschine (1) drehfest verbundene elektrische Generatoranordnung (3),
wenigstens einen aus der Generatoranordnung (3) gespeisten, das Kraftfahrzeug antreibenden Elektromotor (11) und
eine elektronische Steuerung (19, 33, 37), die die von der Generatoranordnung (3) erzeugte elektrische Leistung und/oder die von dem Elektromotor (11) aufgenommene elektrische Leistung abhängig von der Einstellung eines Fahrpedals (23) steuert, wobei der das Kraftfahrzeug antreibende Elektromotor (11) im Schubbetrieb des Kraftfahrzeugs als Generator arbeitet und die Generatoranordnung (3) während des Anlassens der Brennkraftmaschine (1) oder im Schubbetrieb des Kraftfahrzeugs als Motor arbeitet und die Brennkraftmaschine antreibt, insbesondere nach Anspruch 1,
dadurch gekennzeichnet,
daß die Steuerung (19, 33, 37) während des Motorbetriebs der Generatoranordnung (3) den momentanen Verlauf des Generatorstroms bei abgestellter Zündung und/oder Kraftstoffzufuhr der Brennkraftmaschine (1) erfaßt und hiervon abhängig den momentanen Verlauf des von der Generatoranordnung (3) erzeugten Schleppmoments in Abhängigkeit vom Kurbelwellenwinkel der Brennkraftmaschine ermittelt
und daß die Steuerung (19, 33, 37) Abweichungen der Größe und/oder des Verlaufs des ermittelten Schleppmoments von vorgegebenen Sollwerten und/oder einem Sollverlauf erfaßt und abhängig von der Größe und/oder dem Verlauf der Abweichung ein eine Betriebsstörung repräsentierendes Steuersignal erzeugt.

3. Antriebsanordnung nach Anspruch 2,
dadurch gekennzeichnet,
daß die Steuerung den momentanen Verlauf des Schleppmoments in Abhängigkeit der Kurbelwellen-Winkelposition in einem Datenspeicher (31) speichert.

4. Antriebsanordnung nach Anspruch 3,
dadurch gekennzeichnet,
daß der Verlauf des Schleppmoments für wenigstens 720° des Kurbelwellenwinkels in dem Datenspeicher (31) gespeichert ist.

5. Antriebsanordnung nach Anspruch 3 oder 4,
dadurch gekennzeichnet,
daß die Steuerung (19, 33, 37) während des Motorbetriebs der Generatoranordnung (3) die Drehzahl und/oder die Temperatur der Brennkraftmaschine (1) erfaßt und den momentanen Verlauf des Schleppmoments für mehrere unterschiedliche Werte und/oder zumindest einen zeitabhängigen Verlauf der Drehzahl und/oder der Temperatur ermittelt und in dem Datenspeicher (1) speichert.

6. Antriebsanordnung nach einem der Ansprüche 2 bis 5,
dadurch gekennzeichnet,
daß die Steuerung (19, 33, 37) das Schleppmoment lediglich nach einer vorbestimmten Mehrzahl von Anlaßvorgängen der Brennkraftmaschine (1) und/oder nach einer vorbestimmten Fahrstrecke des Kraftfahrzeugs und/oder oberhalb einer festgelegten Temperatur der Brennkraftmaschine (1) auf Abweichungen von den vorgegebenen Sollwerten überprüft.

7. Antriebsanordnung nach einem der Ansprüche 2 bis 6,
dadurch gekennzeichnet,
daß die Generatoranordnung (3) mehrere Wicklungsstränge aufweist und den momentanen Verlauf des Schleppmoments aus den jeweils für sich erfaßten Strömen in den einzelnen Wicklungssträngen ermittelt.

8. Antriebsanordnung nach einem der Ansprüche 1 bis 7,
dadurch gekennzeichnet,
daß das die Betriebsstörung repräsentierende Steuersignal eine Warneinrichtung (57) aktiviert und/oder einen Fehlerspeicher (31) eines Diagnosesystems setzt und/oder die Steuerung (19, 33, 37) ein die maximale Leistung und/oder die maximale Drehzahl der Brennkraftmaschine (1) und/oder die Kraftstoffeinspritzmenge defekter Zylinder reduzierendes Notfahrprogramm aktiviert.

## Claims

1. A drive system for a motor vehicle, comprising an internal combustion engine (1) with at least one controlling element (29) influencing its power and/or its torque and/or its speed of rotation, controllable by a motor element (27),
an electric generator system (3) connected non-rotationally to the output shaft of the internal combustion engine (1),
at least one electric motor (11) powered by the generator system (3) and driving the motor vehicle, an electronic control means (19, 33, 37) which firstly controls at least the one motor element (27) and secondly the electric power generated by the generator system (3) and/or the electric power taken up by the electric motor (11) depending on the setting of an accelerator pedal (23),
means (35) for detecting an actual value of the speed of rotation of the internal combustion engine (1) or of the generator system (3) coupled therewith and also means for detecting an actual value of the electric power generated by the generator system (3) and/or taken up by the electric motor (11), the control means (19, 33, 37) comprising speed regulating means (33) which keep the actual speed of rotation in a time average at a predetermined desired speed value and power regulating means (37) which keep the actual electric power in a time average at a predetermined desired power value,
characterised in that
the control means (19, 33, 37) detects the instantaneous course of the current of the generator system (3) as a function of the instantaneous angular position of the crankshaft of the internal combustion engine (1), dependent on the current determines the instantaneous course of the torque of the internal combustion engine (1) as a function of the angular position of the crankshaft and compares it with desired values stored in a data store (31) for the size and/or the instantaneous course of the torque and in the event of deviations of a predetermined size or a predetermined course generates a control signal representing an operating breakdown.

2. A drive system for a motor vehicle, comprising an internal combustion engine (1),
an electric generator system (3) connected non-rotationally to the output shaft of the internal combustion engine (1),
at least one electric motor (11) powered by the generator system (3) and driving the motor vehicle, and an electronic control means (19, 33, 37) which controls the electric power generated by the generator system (3) and/or the electric power taken up by the electric motor (11) depending on the setting of an accelerator pedal (23), the electric motor (11) driving the motor vehicle operating as a generator in overrun operation of the motor vehicle, and the generator system (3) during the starting of the internal combustion engine (1) or in overrun operation of the motor vehicle operating as a motor and driving the internal combustion engine,
in particular according to Claim 1,
characterised in that
the control means (19, 33, 37) during the motor operation of the generator system (3) detects the instantaneous course of the generator current when the ignition and/or supply of fuel to the internal combustion engine (1) is switched off and dependent thereon determines the instantaneous course of the drag moment generated by the generator system (3) as a function of the crankshaft angle of the internal combustion engine,
and that the control means (19, 33, 37) detects deviations in the size and/or course of the drag moment determined from predetermined desired values and/or a desired course and dependent on the size and/or the course of the deviation generates a control signal representing an operating breakdown.

3. A drive system according to Claim 2, characterised in that the control means stores the instantaneous course of the drag moment in a data store (31) as a function of the angular position of the crankshaft.

4. A drive system according to Claim 3, characterised in that the course of the drag moment for at least 720° of the crankshaft angle is stored in the data store (31).

5. A drive system according to Claim 3 or 4, characterised in that the control means (19, 33, 37) during motor operation of the generator system (3) detects the speed of rotation and/or the temperature of the internal combustion engine (1) and determines the instantaneous course of the drag moment for several different values and/or at least one time-dependent course of the speed of rotation and/or the temperature and stores it in the data store (1).

6. A drive system according to one of Claims 2 to 5, characterised in that the control means (19, 33, 37) checks the drag moment for deviations from the predetermined desired values only after a predetermined number of starting operations of the internal combustion engine (1) and/or after a predetermined distance travelled by the motor vehicle and/or above a set temperature of the internal combustion engine (1).

7. A drive system according to one of Claims 2 to 6, characterised in that the generator system (3) has a plurality of phase belts and determines the instantaneous course of the drag moment from the currents each detected individually in the individual phase belts.

8. A drive system according to one of Claims 1 to 7, characterised in that the control signal representing the operating breakdown activates a warning means (57) and/or sets a fault store (31) of a diagnostic system and/or the control means (19, 33, 37) activates an emergency program which reduces the maximum power and/or the maximum speed of the internal combustion engine (1) and/or the amount of fuel injection of defective cylinders.

## Revendications

1. Dispositif d'entraînement pour un véhicule automobile, comportant un moteur à combustion interne (1) ayant au moins un organe de réglage (29), pouvant être commandé par un servomoteur (27), influençant sa puissance et/ou son couple et/ou son régime, un dispositif générateur électrique (3) relié à l'arbre de sortie du moteur à combustion interne (1) de façon solidaire en rotation, au moins un moteur électrique (11) entraînant le véhicule automobile et alimenté à partir du dispositif générateur (3), une commande électronique (19,33,37) qui commande, d'une part, au moins un servomoteur (27) et, d'autre part, la puissance électrique engendrée par le dispositif générateur (3) et/ou la puissance électrique reçue par le moteur électrique (11), de façon dépendant du réglage d'une pédale d'accélérateur (23), des moyens (35) pour détecter la valeur réelle du régime du moteur à combustion interne (1) ou du dispositif générateur (3) couplé à celui-ci, ainsi que des moyens pour détecter une valeur réelle de la puissance électrique engendrée par le dispositif générateur (3) et/ou reçue par le moteur électrique (11), la commande (19,33,37) comportant des moyens de réglage (33) du régime, qui maintiennent le régime réel, en moyenne dans le temps, à une valeur de consigne de régime prédéfinie et comportant des moyens de réglage de puissance (37), qui maintiennent la puissance électrique réelle, en moyenne dans le temps, à une valeur de consigne de puissance prédéfinie,
caractérisé en ce que la commande (19,33,37) détecte l'allure instantanée du courant du dispositif générateur (3) de façon dépendant de la position angulaire instantanée du vilebrequin du moteur à combustion interne (1), détermine, de façon dépendant du courant, l'allure instantanée du couple du moteur à combustion interne (1), de façon dépendant de la position angulaire du vilebrequin, et effectue une comparaison avec des valeurs de consigne stockées dans une mémoire de données (31) pour la valeur et/ou l'allure instantanée du couple, ainsi que, pour des écarts avec une valeur prédéfinie ou une allure prédéfinie, engendre un signal de commande représentant un problème de fonctionnement.

2. Dispositif d'entraînement pour un véhicule automobile, comportant un moteur à combustion interne (1), un dispositif générateur électrique (3) relié à l'arbre de sortie du moteur à combustion interne (1) de façon solidaire en rotation, au moins un moteur électrique (11) alimenté par le dispositif générateur (3) et entraînant le véhicule automobile, et une commande électronique (19,33,37), qui commande la puissance électrique engendrée par le dispositif générateur (3) et/ou la puissance électrique reçue par le moteur électrique (11) de façon dépendant du réglage d'une pédale d'accélérateur (23), le moteur électrique (11) entraînant le véhicule automobile travaillant, en fonctionnement d'avance du véhicule automobile, comme générateur et le dispositif générateur (3), pendant le démarrage du moteur à combustion interne (1) ou en fonctionnement d'avance du véhicule automobile, travaillant comme moteur et entraînant le moteur à combustion interne, en particulier selon la revendication 1,
caractérisé en ce que la commande (19,33,37), pendant le fonctionnement moteur du dispositif générateur (3), détecte l'allure instantanée du courant du générateur à l'arrêt de l'allumage et/ou lorsque du carburant est amené au moteur à combustion interne (1) et, de façon dépendant de cela, détermine l'allure instantanée du moment de freinage engendré par le dispositif générateur (3) de façon dépendant de l'angle du vilebrequin du moteur à combustion interne, en ce que la commande (19,33,37) détecte des écarts de la valeur et/ou de l'allure du moment de freinage détectée de valeurs de consigne prédéfinies et/ou d'une allure de consigne et, de façon dépendant de la valeur et/ou de l'allure de l'écart, engendre un signal de commande représentant un problème de fonctionnement.

3. Dispositif d'entraînement selon la revendication 2,
caractérisé en ce que la commande mémorise l'allure instantanée du moment de freinage, de façon dépendant de la position angulaire du vilebrequin, dans une mémoire de données (31).

4. Dispositif d'entraînement selon la revendication 3,
caractérisé en ce que l'allure du moment de freinage est mémorisée dans la mémoire de données (31) pour au moins 720 degrés de rotation du vilebrequin.

5. Dispositif d'entraînement selon la revendication 3 ou 4,
caractérisé en ce que la commande (19,33,37), pendant le fonctionnement moteur du dispositif générateur (3), détecte le régime et/ou la température du moteur à combustion interne (1) et détermine l'allure instantanée du moment de freinage pour plusieurs valeurs différentes et/ou au moins une allure, dépendant du temps, du régime et/ou de la température et les stocke dans la mémoire de données (31).

6. Dispositif d'entraînement selon une des revendications 2 à 5,
caractérisé en ce que la commande (19,33,37) contrôle le moment de freinage uniquement après un nombre prédéfini de processus de démarrage du moteur à combustion interne (1) et/ou après une course prédéterminée du véhicule automobile et/ou au-dessus d'une température spécifiée du moteur à combustion interne (1), en ce qui concerne des écarts des valeurs de consigne prédéfinies.

7. Dispositif d'entraînement selon une des revendications 2 à 6,
caractérisé en ce que le dispositif générateur (3) présente plusieurs bobinages et détermine l'allure instantanée du moment de freinage à partir des courants à chaque fois détectés en soi dans les bobinages individuels.

8. Dispositif d'entraînement selon une des revendications 1 à 7,
caractérisé en ce que le signal de commande représentant le problème de fonctionnement active un dispositif d'alarme (57) et/ou une mémoire d'erreurs (31) d'un système de diagnostic, et/ou la commande (19,33,37) active un programme de fonctionnement de secours réduisant la puissance maximale et/ou le régime maximal du moteur à combustion interne (1) et/ou la quantité d'injection de carburant de cylindres défectueux.
